# EUROPÄISCHE PATENTANMELDUNG

(11) **EP 0 809 335 A2**
(43) Veröffentlichungstag der Anmeldung: **26.11.1997**
(21) Anmeldenummer: 97401046.4
(22) Anmeldetag: 09.05.1997
(51) Int. Cl.: H01S 3/139

(54) **Resonator für elektromagnetische Wellen mit einer Stabilisierungseinrichtung und Verfahren zum Stabilisieren der Resonatorlänge**

(30) Priorität: 22.05.1996 DE 19620594
(71) Anmelder: ALCATEL ALSTHOM COMPAGNIE GENERALE D'ELECTRICITE, 75008 Paris (FR)
(72) Erfinder: Pfeiffer, Thomas, 70569 Stuttgart (DE); Veith, Gustav, 75378 Bad Liebenzell (DE)
(74) Vertreter: Knecht, Ulrich Karl, Dipl.-Ing.

(57) **Zusammenfassung**

Es ist ein Resonator (1) für elektromagnetische Wellen mit einer Stabilisierungseinrichtung angegeben, die z. B. Teil eines modengekoppelten Faserlasers sein können. Die Stabilisierungseinrichtung (2) dient zu einer Stabilisierung der effektiven Länge des Resonators (1). Die Stabilisierung erfolgt in einem ersten Ausführungsbeispiel durch zwei Temperaturregeleinrichtungen (3, 4), die die Temperatur eines ersten Teils (L1) und die Temperatur eines zweiten Teils (L2) des Resonators (1) regeln. Die Temperatur des zweiten Teils (L2) wird in Abhängigkeit von einem Fehlersignal geregelt, das durch Abweichungen von einer Sollänge des Resonator (1) entsteht. Der zweite Teil (L2) ist wesentlich kürzer als der erste Teil (L1).

## Beschreibung

Die Erfindung betrifft einen Resonator für elektromagnetische Wellen gemäß dem Oberbegriff des Anspruchs 1 oder 8. Außerdem betrifft die Erfindung ein Verfahren zum Stabilisieren der Länge eines Resonators.

Ein Resonator für elektromagnetische Wellen ist z. B. ein Lichtwellenleiter, der Teil eines Faserlasers ist. Faserlaser sind hinreichend bekannt, z. B. aus X. Shan et al, "Stabilising Er Fibre Soliton Laser With Pulse Phase Locking", Electronics Letters, 16th January 1992, Vol. 28, No. 2, Seiten 182 bis 184. Daraus ist ein aktiv modengekoppelter Faserlaser bekannt. Der Faserlaser ist als Ringlaser ausgeführt und dient als optischer Pulsgenerator. In den Faserring sind u. a. ein piezoelektrisches Element, ein Phasenmodulator und ein Koppler eingefügt, an dem ein Teil des Lichts ausgekoppelt werden kann. Durch Anlegen einer Spannung an das piezoelektrische Element kann das Faserstück, das um das piezoelektrische Element gewickelt ist, gedehnt werden; dadurch kann die Länge des Faserstücks verändert werden. Durch den Koppler wird ein Teil des Lichts aus dem Faserring ausgekoppelt und einer Phasenregeleinrichtung zugeführt, die die Spannung für das piezoelektrische Element erzeugt.

In der genannten Veröffentlichung ist angegeben, daß Faserlaser auf Temperaturänderungen empfindlich reagieren, d. h. die Länge des Faserringes kann sich z. B. aufgrund von Temperaturschwankungen ändern, was einen instabilen Laserbetrieb zur Folge haben kann. Dies ist vor allem in der Übertragungstechnik ein Problem, wo bereits kleinste Instabilitäten unakzeptable Bitfehlerraten verursachen. Durch das piezoelektrische Element kann die Auswirkung einer temperaturbedingten Längenänderung reduziert werden, denn je nach Betrag und Richtung der Längenänderung kann das Faserstück mehr oder weniger stark gedehnt werden.

Dadurch wird die Länge, genauer die effektive Länge des Faserringes (Resonator) stabilisiert. Für die effektive Länge L_{eff} gilt:
L_{eff} = √ε• L_{geo}, mit der Dielektrizitätskonstanten ε und der geometrischen Länge L_{geo}; für die Optik ist √ε gleich dem Brechungsindex n und man spricht von der optischen Länge.

Alternativ zu dem im vorhergehenden beschriebenen Konzept, kann eine Stabilisierung der optischen Länge eines Faserstücks auch über eine Regelung der Temperatur des Faserstücks erfolgen. Die erforderliche Genauigkeit der Regelung von ca. +/- 0,01 °C erfordert jedoch einen hohen technischen Aufwand.

Der Erfindung liegt die Aufgabe zugrunde, einen Resonator für elektromagnetische Wellen mit einer Stabilisierungseinrichtung anzugeben, bei dem die Stabilisierung der effektiven Länge des Resonators auf eine andere Art erfolgt. Ein die Aufgabe lösender Resonator ist Gegenstand des Anspruchs 1. Der Erfindung liegt außerdem die Aufgabe zugrunde, ein Verfahren zur Stabilisierung der Länge eines Resonator für elektromagnetische Wellen anzugeben. Ein diese Aufgabe lösendes Verfahren ist Gegenstand des Anspruchs 7. Ein Ausführungsbeispiel eines Resonators ist Gegenstand des Anspruchs 8. Vorteilhafte Ausgestaltungen der Erfindung sind in den Unteransprüchen angegeben.

Ein Vorteil der Erfindung ist, daß in einem Ausführungsbeispiel die Anforderungen an die Genauigkeit einer Temperaturregelung für den Resonator deutlich reduziert werden, z. B. um eine Größenordnung von 0,01 °C auf 0,1 °C.

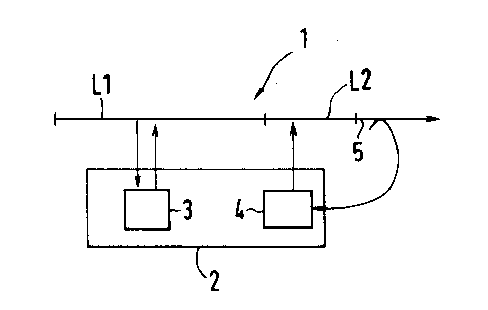

Die Erfindung wird im folgenden beispielhaft anhand einer einzigen Zeichnung erläutert. In dieser Zeichnung ist ein Resonator 1 für elektromagnetische Wellen mit einer Stabilisierungseinrichtung 2 gezeigt. Der Resonator 1 und die Stabilisierungseinrichtung 2 können z. B. Teil eines Faserlasers sein; der Resonator 1 ist in diesem Fall ein Lichtwellenleiter, der auch als Ring ausgeführt sein kann. Für die weitere Beschreibung ist der Resonator 1 ein Lichtwellenleiter.

Weitere Anwendungsmöglichkeiten der Erfindung bestehen in optischen Bauelementen, in denen Interferenzen eine Rolle spielen. Beispiele für solche optischen Bauelemente sind Fabry-Perot Interferometer und Mach-Zehnder Interferometer, die faseroptisch, integriert optisch oder halbleiterbasierend ausgeführt sein können. Auch bei diesen optischen Bauelementen sind Resonatoren vorhanden, deren optische Länge stabilisiert werden muß, um den Einfluß von Temperaturschwankungen zu minimieren. Prinzipiell ist die Erfindung jedoch überall dort anwendbar, wo es auf eine exakte Stabilisierung der effektiven Länge eines Resonators ankommt, z. B. im Bereich der Mikrowellentechnik, bei der Hohlraumresonatoren verwendet werden.

Der gezeigte Resonator 1 hat eine Länge 1 und ist in einen ersten Teil L1 und in einen zweiten Teil L2 geteilt. Für die folgenden Ausführungen hat der erste Teil L1 eine Länge von 29 m und der zweite Teil L2 eine Länge von 1 m. Die geometrische Länge des Resonators 1 beträgt somit 30 m. Aus einem Ende 5 des zweiten Teils L2 tritt Licht aus, aus dem mit Hilfe nicht gezeigter Mittel ein Fehlersignal abgeleitet werden kann.

In einem ersten Ausführungsbeispiel sind in der Stabilisierungseinrichtung 2 zwei Temperaturregeleinrichtungen 3, 4 vorhanden; dem ersten Teil L1 ist die Temperaturregeleinrichtung 3 zugeordnet und dem zweiten Teil L2 die Temperaturregeleinrichtung 4. Beide Temperaturregeleinrichtungen 3, 4 haben Mittel (z. B. Auswerteschaltungen und Peltier-Elemente), um die Temperatur des ersten Teils L1 und die Temperatur des zweiten Teils L2 zu regeln. Das Fehlersignal wird der Temperaturregeleinrichtung 4 zugeführt. Ein Regelmechanismus für das erste Ausführungsbeispiel wird im folgenden anhand von Zahlenbeispielen für einen modengekoppelten Faserlaser näher erläutert.

Bei einer (geometrischen) Länge des Resonators 1 von 30 m beträgt die optische Länge 43,5 m (optische Länge = geometrische Länge Brechungsindex n des Resonators 1; n = 1,45). Ein stabiler Betrieb des modengekoppelten Faserlasers erfordert eine relative Stabilisierung der Länge des Resonators 1,, d. h. der optischen Länge des Resonators 1, auf einen Wert im Bereich von 10⁻⁷. Bei einer Resonatorlänge von 30 m darf somit die durch Temperaturänderungen verursachte Längenänderung nicht mehr als 4,35 µm betragen. Durch Temperaturänderungen von wenigen Grad Celsius werden jedoch wesentlich größere Längenänderungen verursacht: Für Quarzglas beträgt der Temperaturkoeffizient des Brechungsindex ca. 10⁻⁵/°C und der der (geometrischen) Längenänderung ca. 10⁻⁶/°C. Aus den angegebenen Zahlenwerten ist ersichtlich, daß bei einer Temperaturregelung eine Genauigkeit der Temperatur von +/- 0,01 °C erforderlich wäre.

Die Temperatur des ersten Teils L1 wird durch die Temperaturregeleinrichtung 3 mit einer Genauigkeit von +/- 0,1 °C konstant gehalten. Bedingt durch einen solchen Toleranzbereich der Temperatur wird eine Brechungsindexänderung verursacht, die zu einer Änderung von +/- 42,05 µm der optischen Länge des ersten Teils L1 führen kann. Diese Änderung der optischen Länge des ersten Teils L1, und damit die Änderung der optischen Länge des Resonators 1, verursacht ein Fehlersignal, das direkt vom Betrag der Längenänderung abhängig ist. Das Fehlersignal entsteht aus einer Abweichung der momentanen optischen Länge des Resonators 1 von einem Sollwert der optischen Länge des Resonators 1, bei dem keine oder nur minimale Instabilitäten des Faserlasers auftreten. Dieses Fehlersignal ist aus charakteristischen Parametern der Resonatoremission ableitbar. Ein solcher charakteristischer Parameter ist z. B. die Amplitude von im Resonator 1 vorkommenden Relaxationsschwingen.

Die Ableitung des Fehlersignals erfolgt z. B. mit Hilfe der Auswertung von Synchronisationsabweichungen. Der Faserlaser hat neben dem bereits erwähnten Resonator 1 und der Stabilisierungseinrichtung 2 u. a. einen Pumplaser und einen optischen Verstärker. Pumplaser und optischer Verstärker sind in der Figur nicht gezeigt. Nach dem Einschalten des Pumplasers des aktiv modengekoppelten Faserlasers bildet sich im Resonator 1 aus dem Rauschen heraus Signallicht, das durch stimulierte Emission im optischen Verstärker entsteht. Aus dem Faserlaser tritt Licht aus, das aus dem Signallicht und Störsignalen zusammengesetzt ist; ein Störsignal rührt von Relaxationsschwingungen her, die in Faserlasern aufgrund von Schwankungen der Pumplichtwellenlänge oder der Pumpleistung des Pumplasers oder von Schwankungen der Verluste im Resonator durch thermische oder mechanische äußere Einflüsse auftreten. Die Amplitude des Störsignals verändert sich mit der Genauigkeit der Synchronisation von Umlauffrequenz und externer Taktfrequenz. Bei optimaler Synchronisation ist die Amplitude des Störsignals minimal. Mit zunehmender Abweichung der Synchronisation von Umlauffrequenz und externer Taktfrequenz nimmt die Amplitude des Störsignals zu. Aus der Amplitude des Störsignals kann somit das Fehlersignal abgeleitet werden.

Zur Ableitung des Fehlersignals sind prinzipiell auch andere Methoden geeignet, die direkt oder indirekt die optische Länge eines Resonators oder Abweichungen von der Sollänge bestimmen. Wesentlich ist, daß ein Zusammenhang zwischen dem Fehlersignal und der Abweichung von der Sollänge besteht.

Das abgeleitete Fehlersignal wird der Temperaturregeleinrichtung 4 zugeführt, die die Temperatur des zweiten Teils L2, d. h. des kürzeren Faserstücks, mit einer Genauigkeit von +/- 0,1 °C um +/- 3 °C verändern kann, wodurch eine Änderung von +/- 43,5 µm der optischen Länge des zweiten Teils L2 verursacht werden kann. Steigt die Temperatur des ersten Teils L1 aufgrund der Regelungenauigkeit um beispielsweise +0,1 °C, wird die Temperatur des zweiten Teils L2 um -2,9 °C gesenkt, um die Änderung der optischen Länge auszugleichen. Da beide Temperaturregeleinrichtungen 3, 4 eine Genauigkeit von +/- 0,1 °C haben, wird insgesamt die Genauigkeit der effektiven Länge auf 3,3 x 10⁻⁸ erhöht.

In einem zweiten Ausführungsbeispiel sind in der Stabilisierungseinrichtung 2 eine Temperaturregeleinrichtung 3 und eine elektromechanische Einrichtung vorhanden. Für die Temperaturregeleinrichtung 3 gilt das bereits in der vorhergehenden Beschreibung ausgeführte. Die dem zweiten Teil L2 des Resonators 1 zugeordnete elektromechanische Einrichtung ist z. B. ein piezoelektrisches Element, um das der zweite Teil L2 oder ein Teil davon gewickelt ist. Durch Variation einer angelegten Spannung kann das Volumen des piezoelektrischen Elements vergrößert oder verkleinert werden, wodurch es zu einer Dehnung oder Stauchung des zweiten Teils L2 kommt. Der Betrag der Spannung ist von dem Fehlersignal abhängig, das dem piezoelektrischen Element zugeführt wird. Die Ableitung des Fehlersignals ist in der vorhergehenden Beschreibung bereits ausgeführt.

In einem weiteren Ausführungsbeispiel hat die Stabilisierungseinrichtung 2 an Stelle der elektromechanischen Einrichtung eine elektrooptische Einrichtung, bei der durch Anlegen einer Spannung eine Brechungsindexänderung verursacht werden kann.

Eine elektrooptische Einrichtung ist allgemein bekannt und ist z. B. als Lithiumniobat (LiNbO₃)-Element ausgeführt. Die elektrooptische Einrichtung ist so in den zweiten Teil L2 des Resonators 1 eingefügt, daß sie sich im Ausbreitungsweg des Lichts befindet. Die angelegte Spannung ist ebenfalls von dem Fehlersignal abhängig. Die erwähnten Brechungsindexänderungen verursachen eine Änderung der effektiven Länge des zweiten Teils L2.

In einem weiteren Ausführungsbeispiel sind für die Stabilisierungseinrichtung 2 folgende Modifikationenen möglich, durch die ebenfalls eine Stabilisierung der effektiven Länge des Resonators 1 erzielt wird. Die Stabilisierungseinrichtung 2 kann an Stelle der Temperaturregeleinrichtung 3 eine elektromechanische Einrichtung oder einer elektrooptische Einrichtung haben, um die geometrische oder optische Länge des ersten Teils L1 des Resonators 1 zu regeln. Wie eine Regelung mit Hilfe einer elektromechanischen oder elektrooptischen Einrichtung erfolgt, wurde bereits bei den vorhergehenden Ausführungsbeispielen erläutert. Auch bei einer solchen Regelung des ersten Teils L1 ist aus der charakteristischen Resonatoremission ein Fehlersignal ableitbar, das aus einer Abweichung der momentanen optischen Länge des Resonators 1 von einem Sollwert der optischen Länge des Resonators 1 hervorgeht. Für die dem zweiten Teil L2 des Resonators 1 zugeordnete Einrichtung 4 kann wie bei den vorhergehenden Beispielen eine elektromechanische oder elektrooptische Einrichtung verwendet werden.

Bei diesem Ausführungsbeispiel hat die Stabilisierungseinrichtung 2 also eine Einrichtung 3, um die geometrische oder effektive Länge des ersten Teils L1 des Resonators 1 zu regeln, und eine Einrichtung 4, die in Abhängigkeit von dem Fehlersignal, das aus der optischen Länge des Resonators 1 ableitbar ist, die geometrische oder effektive Länge des zweiten Teils L2 des Resonators 1 verändern kann, um so die effektive Länge des Resonators 1 zu stabilisieren.

## Patentansprüche

1. Resonator (1) für elektromagnetische Wellen mit einer Stabilisierungseinrichtung (2), die zu einer Stabilisierung der effektiven Länge des Resonators (1) dient,
**dadurch gekennzeichnet ,** daß die Stabilisierungseinrichtung (2) eine erste Einrichtung (3) hat, um die Temperatur eines ersten Teils (L1) des Resonators (1) zu regeln, und daß die Stabilisierungseinrichtung (2) eine zweite Einrichtung (4) hat, die in Abhängigkeit von einem Fehlersignal, das aus der effektiven Länge des Resonators (1) ableitbar ist, die Länge eines zweiten Teils (L2) des Resonators (1) verändern kann, um so die effektive Länge des Resonators (1) zu stabilisieren.

2. Resonator nach Anspruch 1, dadurch gekennzeichnet, daß der erste Teil (L1) des Resonators (1) länger als der zweite Teil (L2) des Resonators (1) ist.

3. Resonator nach Anspruch 1 oder 2, dadurch gekennzeichnet, daß die zweite Einrichtung (4) eine Temperaturregeleinrichtung ist, die die Temperatur des zweiten Teils (L2) des Resonators (1) regelt, um so die effektive Länge des zweiten Teils (L2) zu verändern.

4. Resonator nach Anspruch 1 oder 2, dadurch gekennzeichnet, daß die zweite Einrichtung (4) eine elektromechanische Einrichtung ist, die durch Dehnen oder Stauchen die Länge des zweiten Teils (L2) des Resonators (1) verändern kann.

5. Resonator nach Anspruch 1 oder 2, dadurch gekennzeichnet, daß die zweite Einrichtung (4) eine elektrooptische Einrichtung ist, die in Abhängigkeit einer angelegten Spannung die effektive Länge des zweiten Teils (L2) des Resonators (1) verändern kann.

6. Resonator nach einem der vorhergehenden Ansprüche, dadurch gekennzeichnet, daß das Fehlersignal aus charakteristischen Parametern der Resonatoremission ableitbar ist und daß das Fehlersignal eine Abweichung von einem Sollwert der effektiven Länge des Resonators (1) darstellt.

7. Verfahren zum Stabilisieren der Länge eines Resonators (1) für elektromagnetische Wellen, der mit einer Stabilisierungseinrichtung (2) verbunden ist,
**dadurch gekennzeichnet,**
- daß in einem ersten Schritt durch eine erste Einrichtung (3) die Temperatur eines ersten Teils (L1) des Resonators (1) geregelt wird,
- daß in einem zweiten Schritt in Abhängigkeit von der effektiven Länge des Resonators (1) ein Fehlersignal abgeleitet wird, und
- daß in einem dritten Schritt in Abhängigkeit von dem Fehlersignal die effektive Länge eines zweiten Teils (L2) des Resonators (1) verändert wird, um so die effektive Länge des Resonators (1) zu stabilisieren.

8. Resonator (1) für elektromagnetische Wellen mit einer Stabilisierungseinrichtung (2), die zu einer Stabilisierung der effektiven Länge des Resonators (1) dient,
**dadurch gekennzeichnet**, daß die Stabilisierungseinrichtung (2) eine erste Einrichtung (3) hat, um die geometrische oder effektive Länge eines ersten Teils (L1) des Resonators (1) zu regeln, daß die Stabilisierungseinrichtung (2) eine zweite Einrichtung (4) hat, die in Abhängigkeit von einem Fehlersignal, das aus der effektiven Länge des Resonators (1) ableitbar ist, die geometrische oder effektive Länge eines zweiten Teils (L2) des Resonators (1) verändern kann, um so die effektive Länge des Resonators (1) zu stabilisieren.
